# EUROPEAN PATENT SPECIFICATION

(11) **EP 4 313 664 B1**
(45) Date of publication and mention of the grant of the patent: **14.05.2025**
(21) Application number: 22717678.1
(22) Date of filing: 21.03.2022
(51) Int. Cl.: B60L 50/20

(54) **ELECTRICAL AID APPARATUS FOR AN ANIMAL-DRAWN VEHICLE OR AGRICULTURAL MACHINERY AND METHOD FOR IMPLEMENTING THE AID**
ELEKTRISCHE HILFSVORRICHTUNG FÜR EIN AUS TIEREN GEZOGENES FAHRZEUG ODER EINE LANDWIRTSCHAFTLICHE MASCHINE UND VERFAHREN ZUR IMPLEMENTIERUNG DER HILFSVORRICHTUNG
APPAREIL D'ASSISTANCE ÉLECTRIQUE POUR VÉHICULE TRACTÉ PAR UN ANIMAL OU UN ENGIN AGRICOLE ET PROCÉDÉ DE MISE EN OEUVRE DE L'ASSISTANCE

(30) Priority: 01.04.2021 IT 202100008240
(43) Date of publication of application: 07.02.2024
(73) Proprietor: Systematic Innovation & Design S.r.l., 50132 Firenze (FI) (IT)
(72) Inventor: MONTANI, Daniele, 50136 Firenze (IT)
(86) International application number: PCT/IT2022/050063
(87) International publication number: WO 2022/208562

(56) References cited:
- IT-A1- BO20 080 674
- ESTERMANN ET AL: "E-2CV & E-Mobil", 21 February 2016 (2016-02-21), Braunwald, pages 1 - 4, XP055862396, Retrieved from the Internet <URL:http://val-braunwald.ch/wp-content/uploads/2012/01/E-2CV_E-Kutsche_Braunwald_VAL-2016-02.pdf> [retrieved on 20211117]

## Description

### Field of the invention

The present invention relates to an electrical aid apparatus for animal-drawn vehicle or machine, including human traction, to be applied for example in agricultural processing, in particular an apparatus capable of aiding animal traction by integrating the traction with an electric motor whose action is regulated through the use of dedicated sensors so to keep the traction load on the animal constantly below a stress threshold.

### Description of the prior art

At present many devices are known and designed to operate an electrical aid for horse-drawn vehicle or machine.

Among many inventions, in ITBO20080674 is described an apparatus to integrate electric traction to relieve the strain on the horse while drawing a carriage capable of carrying a wide number of people.

The invention describes a system in which two electric motors, powered by a rechargeable battery pack, operate on the rear wheels to integrate the power supplied by the horse to the vehicle.

These motors are regulated, while operating, by sensors located in a rotating joint on the front steering axle so to read the steering angle of the vehicle.

The two motors operate synchronously in straight motion, while in bends the motors operate at different speed so to compensate the different tangential speeds of inner and outer wheels, driving on two different radii.

An electronic controlled mechanical differential scheme is replicated.

As far as can be understood from the description of the invention, the electrical aid integration is exclusively actuated by the operator.

The differential function, apart from the horse traction aid, is then the only purpose of the invention.

The different operating conditions, such as uphill or downhill in both forward and reverse motion, are not considered in the invention.

In these operating conditions the weight of the towed vehicle or machine is highly relevant in relation to the horse stress.

Uphill the horse has to sustain a significant greater stress, while downhill the horse has to bear the overall weight of the towed vehicle or machine, resulting this in an enormous amount of stress.

Moreover, when operating on agricultural grounds, further peaks of stress may occur due to the composition, conditions and irregularity of the ground itself.

According to the invention, the operating conditions are managed by the operator himself not according to an optimal algorithm that ensure the horse is constantly below a stress threshold.

Furthermore, the motors are always operating, even when the motors action is not needed, thus resulting in a non-optimal energetic configuration.

The use of two electric motors, controlled by a control system and sensors to detect the vehicle's steering angle instead of a mechanical differential is also a complication of an efficient and proven system, resulting in added cost and weight to the towed.

In KR20100107560 what stated above, so the need of a different uphill and downhill behavior of the system, is partially considered.

In this invention also, two electric motors connected to a battery pack are used.

The motors are connected to the drive wheels by means of a clutch that is operated according to the operating conditions.

The motors integrate power to the drawn vehicle when uphill or on flat ground, the power transmission is then decoupled from the electric motors, using them as generators to recharge the battery pack, when going downhill or in general when not required.

Though, in this invention, attempts are made to solve the problem of different operating conditions, the implemented solution is managed in a non-optimal way, with the adoption of two motors and various joints resulting in a complex, expensive and heavy inefficient architecture.

In US5540296, an auxiliary device comprehending two engines that exerts a boost when the power demand is high and an energy recovery when the power demand is low or negative, is described.

A measurement of the primary motive power by reading the deformation of the frame is implemented in the device, as well as a control that increases or decreases the torque generated by reducing or increasing the regenerative braking torque when a threshold value of the primary motive power is, respectively, exceeded or not reached.

The systems so far known in the state of the art are affected by numerous inefficiencies due to the lack of response to the need, in particular felt in agricultural applications, to keep the traction load on the animal constantly below a stress threshold, at varying of both the power required and the operating conditions, such as uphill or downhill, forward and backward and ground conditions.

### Object of the invention

Is therefore felt the need for an electrical aid apparatus for an animal-drawn vehicle or agricultural machinery that solves the above-mentioned problems.

### Summary of the invention

These purposes have been achieved with an apparatus according to one or more of the attached claims.

A first advantage consists in the fact that the apparatus provides traction assistance to the animal by integrating traction with an electric motor whose action is regulated using appropriate sensors so to avoid tiredness of the animal, preferably a horse, by keeping it constantly below a stress threshold.

A further advantage consists in the fact that the apparatus automatically adjust the electric motor power to the different operating conditions, such as uphill or downhill in both forward and reverse, on typically uneven grounds and operating with more or less heavy farm implements according to an algorithm that ensures that the animal, preferably a horse, is kept below a stress threshold and therefore avoiding the animal tiredness.

A further advantage consists in the fact that the apparatus converts the electric motor into a generator for battery recharge, according to the different operating conditions, in particular any time the animal is below a stress threshold or downhill when the stress on the animal must be relieved by slowing down and braking the vehicle.

A further advantage, in particular in agricultural operations, is that the apparatus allows the operating speed to be automatically regulated, thus ensuring not only that the animal, preferably a horse, is kept below a stress threshold but also those agricultural operations are carried out in the best possible way.

### Brief description of the drawings

These and other advantages will be better understood by anyone skilled in the art from the description which follows and from the accompanying drawings given as non-limiting example, in which:

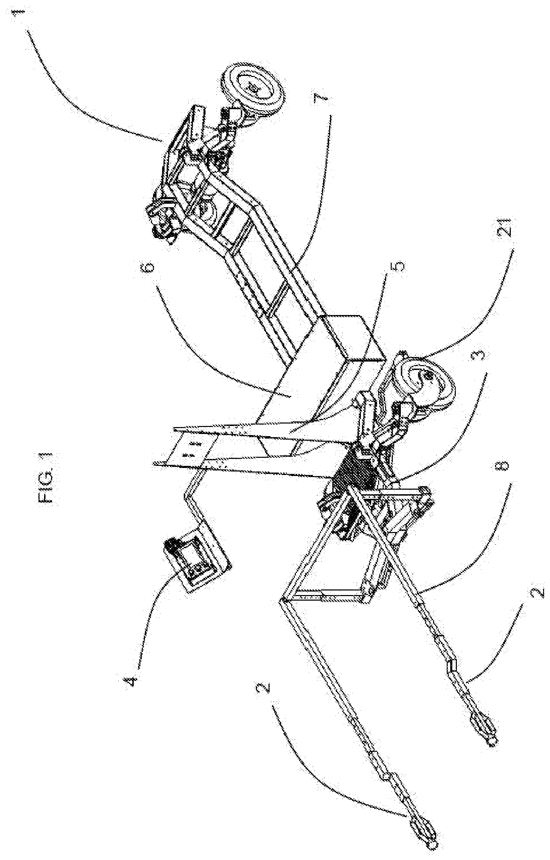

- Fig.1 shows a perspective view of an animal-drawn vehicle for the implementation of the method;

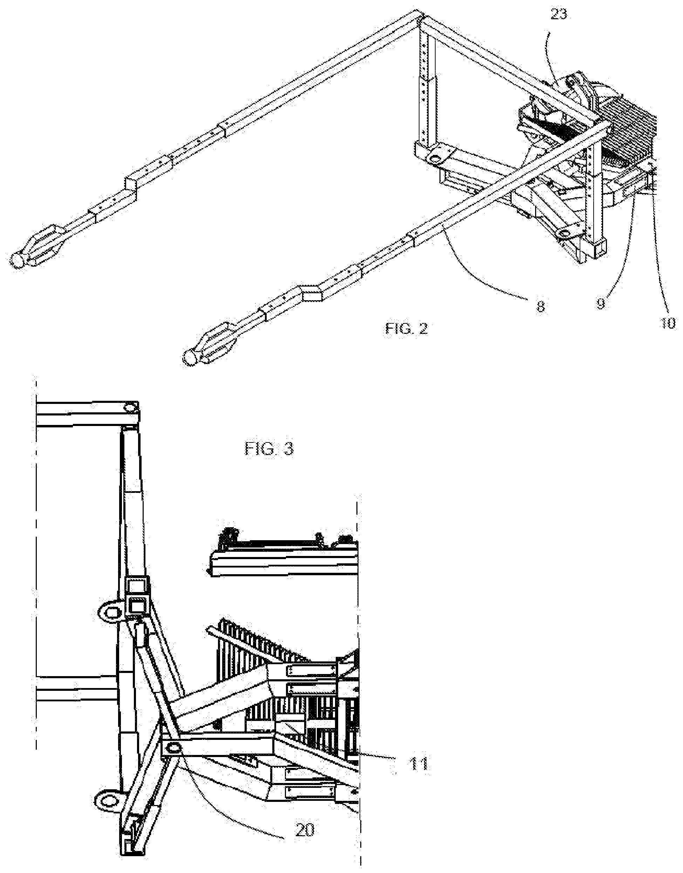

- Fig.2 shows a detail view of the movable part of the animal's attachment to the vehicle in fig.1, where the animal is preferably a horse;
- Fig.3 shows a detail view of the connection of the mobile fastening part to the vehicle chassis, including a force reading sensor;

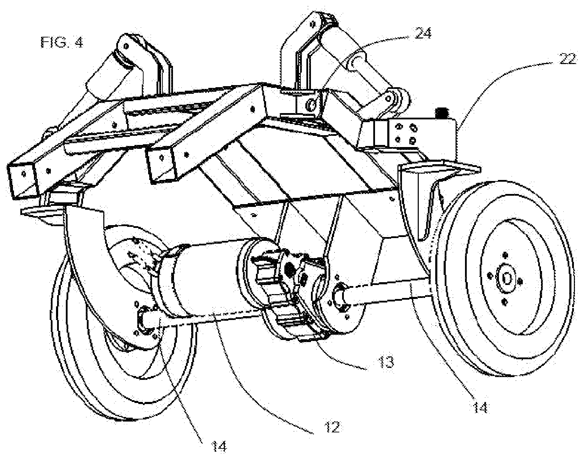

- Fig.4 shows a detail view of the rear of the vehicle;

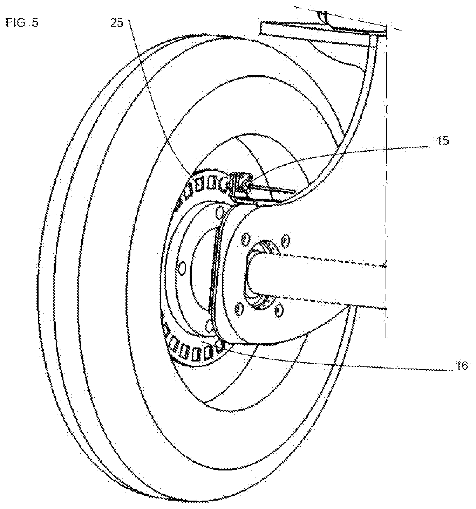

- Fig.5 shows a detail of a vehicle drive wheel;

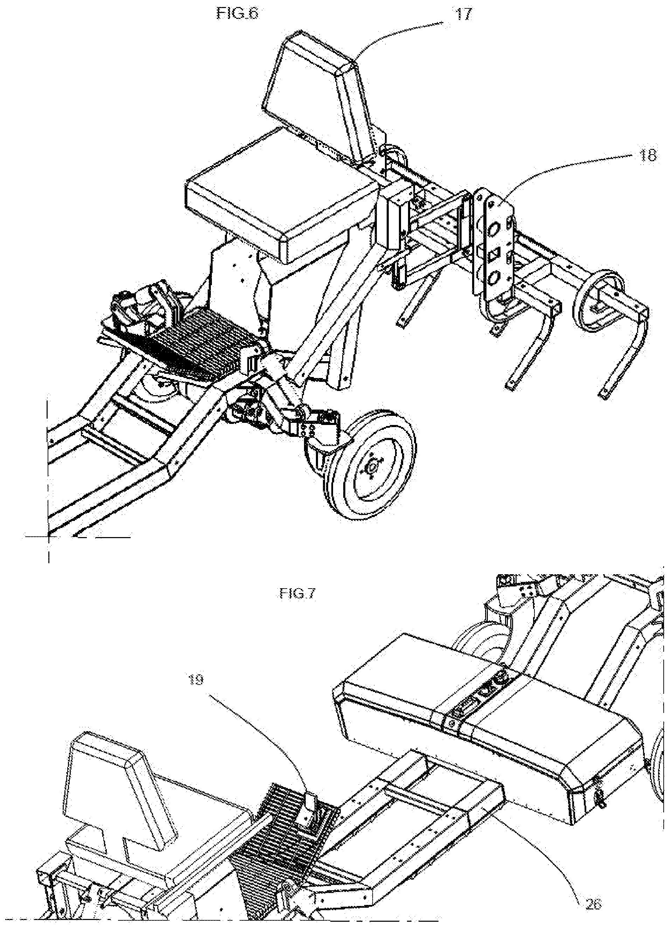

- Fig.6 shows a perspective view of the rear of a vehicle or agricultural machine for implementing the method, in a use configuration;
- Fig.7 shows a detail of the manual control of the method;
- Fig.8 shows the descriptive diagram of the method's operating logic;
- Fig.9 shows the possible system states and corresponding actions of the vehicle's electric motor on flat ground;
- Fig.10 shows the possible system states and corresponding actions of the vehicle's electric motor uphill;
- Fig.11 shows the possible system states and corresponding actions of the vehicle's electric motor downhill;
- Fig. 12 shows a vehicle with highlighted schematically the functional components for implementing the method.

### Detailed description of some exemplary embodiments

With reference to the accompanying drawings a preferred embodiment of an aid apparatus for animal-drawn vehicle or machine, including human traction, to be applied for example in agricultural processing, in particular an apparatus capable of aiding animal traction by integrating the traction with an electric motor whose action is regulated using dedicated sensors so to keep the traction load on the animal constantly below a stress threshold

The apparatus 1 is advantageously implemented in combination with a vehicle comprising a first frame 7, preferably comprising two or more end parts 10 shaped so as to have a prismatic guide function, on said guides a movable frame 3 can slide longitudinally, thanks to the action of several skids 9.

The movable frame 3 and the first frame 7 are connected to each other by a joint 11 comprising a system for measuring the tensile stresses, positive or negative, between the frames 3 and 7, which in a preferred but not exclusive configuration is provided with a load cell.

An adjustable animal attachment system 8, comprising fasteners 2 for securing the animal's vestments to the system in accordance with conventional methods and without causing harm or discomfort to the animal, is also attached to the movable frame 3, which is mounted on the pin 20.

The vehicle may also include operator stands in either front position 5 or rear position 17 depending on the desired configuration of the system.

The apparatus 1 is implemented by means of a central control unit 6, batteries are provided for operating the motor 12, rigidly connected to the first frame 7 and preferably connected to a management unit 4 for adjusting and managing the traction aid parameters.

The control unit 4, in a preferred configuration, consists of a touch screen and electromechanical controls for the selection of parameters and control functions and is located close to the operator stands in either the front 5 or rear 17 position.

A plurality of wheels are connected to the first frame 7, which may have the function of pulling motion and/or detecting the state of motion of the vehicle.

In the preferred case described, there are four traction wheels 21 connected to arms 22 attached to the frame 7 by means of a pin 24 and connected to it by means 23 suitable to exert a compression and traction action such as to keep the wheels in the desired position or in contact with the ground.

However, it is understood that one or more wheels may be provided for the implementation of the method, one or more of which may be used as a motion sensing and/or traction wheel.

The motor 12, including a brake, is connected to a differential coupling 13 rigidly connected to the first frame 7 and via axle shafts 14 to the wheels 21 on the drive axle, in a preferred configuration the rear axle.

The axle shafts 14 are connected to the wheels 21 and to the differential joint 13 by means suitable for transmitting the motion also in the operating condition, such means may preferably but not exclusively include key couplings, elastic collar couplings, spline shaft and cardan joints.

The wheels 21 further comprise sensors capable of reading the motion of the wheel, comprising in the preferred case described a disc 16 with rigidly attached magnets 25 attached to the wheel 21 and a sensor 15, preferably a magnetic sensor, for example a Reed sensor, rigidly attached to the corresponding arm 22 to detect the passage of the magnets 25 during the rotation of the wheel 21.

A command 19, in a preferred configuration a foot pedal, connected to the central control unit 6, is rigidly attached to the operator stand, whether front 5 or rear 17, for the operation of the system in manual mode.

The first frame 7 also includes means for the quick attachment of a tool holder 18 for attaching soil and plant working tools to it, to be operated in agricultural works.

The first frame 7 further comprises a removable part 26 which is replaceable with a similar part of different dimensions to be able to adapt to the mounting of further tools on the system so as to be able to install further tools for processing or transporting materials, rigidly fixed to the first frame 7 by means of the appropriately configured removable part 21.

In the implementation example described, the animal is connected to the system via the means 2 of attachment of the vestments rigidly connected, but adjustable as desired, to the mobile frame 3.

The operator, from the front position 5 or rear position 17, acting on the controls located on the control unit 4, gives consent to maneuver the system by releasing the motor brake 12 and selecting the direction, forward or backward, by means of a selector and the operating mode, automatic or manual.

In manual mode the operator acts on drive 19 to adjust the action of motor 12, with the pedal raised the motor 12 remains in a stationary position performing a braking action, pressing the pedal the motor 12 increases its action in a linear manner.

The manual mode can also be selected and used without an animal connected to the system, at a speed limited to man's pace, in order to carry out operations such as garaging.

In manual mode, for safety purpose, the control conditions remain operative.

In automatic mode, the load measurement system included in the coupling 11 continuously reads the load stress on the animal and communicates it to the central control unit 6, at the same time the sensors 15 read the magnets 25 passage, with said magnets 25 fixed on the disc 16 rigidly connected to and arranged on each traction wheel 21 and communicate the passage to the central control unit 6 independently for each traction wheel 21.

In a preferred configuration, in addition to the information collected by the sensors 15 on the motion of the system, data on the positioning of the system itself and its motion is collected by a GPS sensor to provide both a geolocation of the vehicle and a verification of its motion.

In addition to this data, the central control unit 6 also receives data on the charge of the traction batteries and other data considered relevant by the user to be displayed on the control unit 4 of the control 6, such as, for example, the operation and status of the working implements.

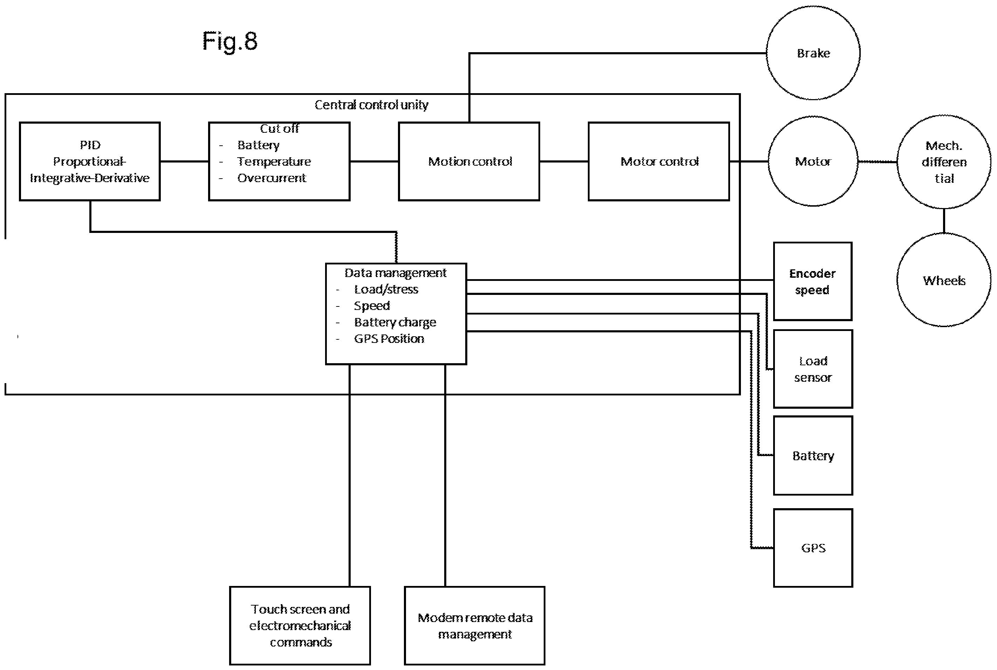

As shown in the diagram in FIG.8, the data are processed by the central control unit by means of a PID system, proportional integrative derivative, in order to control the motor drive according to the operating condition in which it is located and guarantee the correct traction aid action.

The stress load measured by the sensor included in the coupling 11 provides information on the real-time state of stress load on the animal, while the independent motion reading on the traction wheels 21 provides information on both the speed and consequently the motion inertia of the system and the direction of motion, considering the motion direction selected by the operator on the management unit 4.

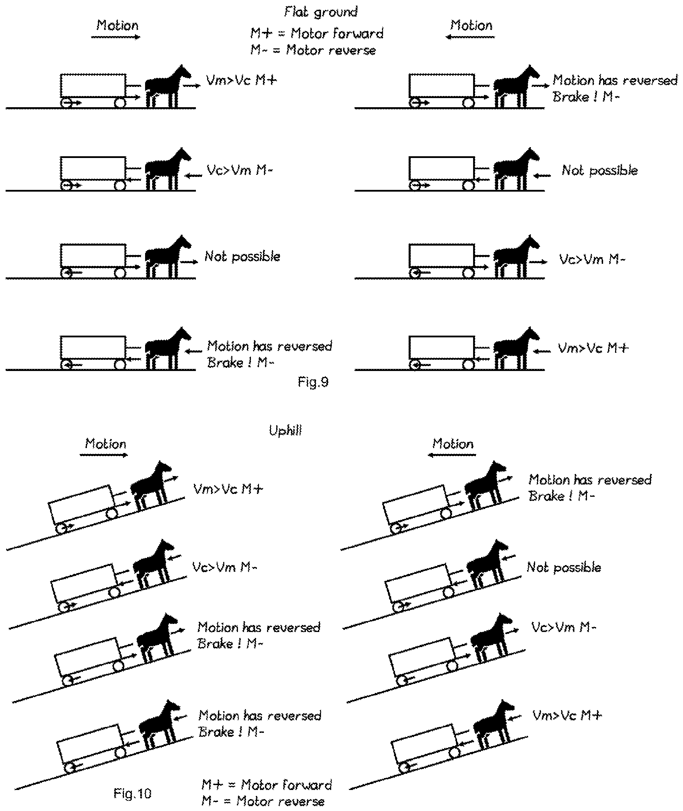

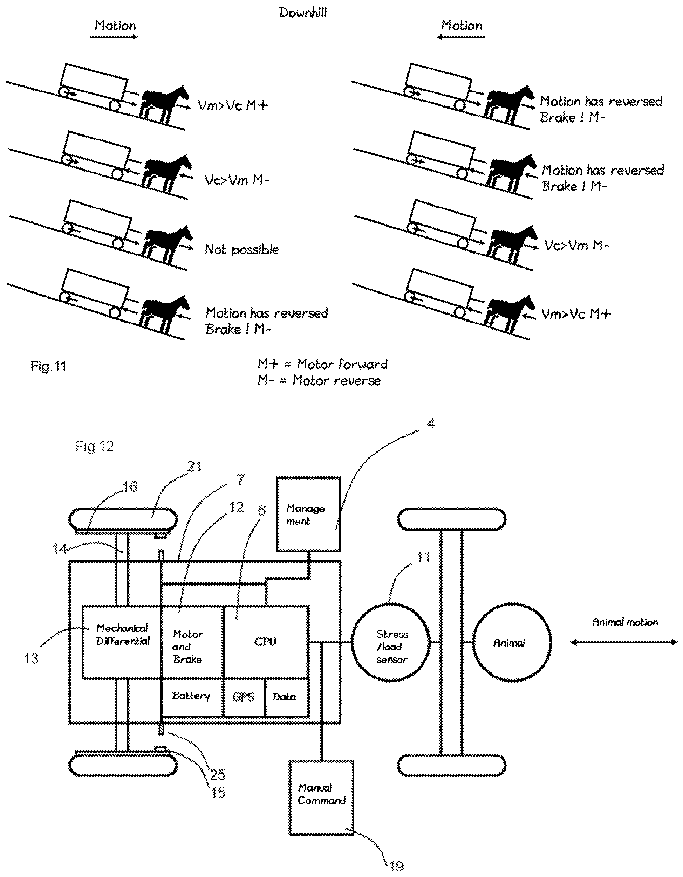

The collected data makes possible to identify in which traction and motion condition the system is, for example, among the cases schematically shown in FIG.9, 10 and 11, and therefore to operate the consequent action on the motor 12, in consideration as well of the information relative to the speed of the system and of the inertia of the vehicle and therefore intervening with a smaller or greater action.

FIG.9, 10 and 11 show some examples of possible conditions of use of the vehicle, e.g. flat ground, downhill and uphill, of the different values of the speed parameters (Vm speed of the vehicle, Vc speed of the animal) and of the forward or reverse conditions M+ / M - of the motor.

Some of the possible operating conditions can also be summarized as follows:
forward motion set by the operator, tensile stress, effective forward motion of the vehicle, if the stress load on the animal is below a predetermined fatigue threshold, no action is taken. If the stress load on the animal is above the threshold, a positive electric traction aid is used;
forward motion set by the operator, tensile stress, effective reverse motion of the vehicle, the motion has reversed, the system is exerting an excessive force in the opposite direction to the intended motion than the animal can do, typically a condition that can occur on a steep slope, the motor 12 must help the animal with forward traction and if that is not possible by braking the system;
forward motion set by the operator, compression stress, effective forward motion of the vehicle, the system is exerting a force on the animal, typically a condition that can occur on a downhill gradient, motor 12 must intervene to help the animal by slowing down the system and if this is not possible by braking the system;
forward motion set by the operator, compression stress (so negative tensile stress) and effective reverse motion of the vehicle, the animal is pushing in the opposite direction to the desired motion, the engine 12 must intervene with forward motion or breaking in opposition to the movement of the animal;
reverse motion set by the operator, tensile stress, effective forward motion of the vehicle, the animal is pushing in the opposite direction to the desired motion, the engine 12 must intervene with forward motion or breaking in opposition to the movement of the animal;
reverse motion set by the operator, tensile stress, effective reverse motion of the vehicle, the system is exerting a force on the animal, typically a condition that can occur uphill, the motor 12 must help the animal with forward traction and if that is not possible by braking the system;
reverse motion set by the operator, compression stress, effective forward motion of the vehicle, the motion has reversed, the system is exerting an excessive force in the opposite direction to the intended motion than the animal can do, typically a condition that can occur on a steep downhill, the motor 12 must help the animal with reverse traction and if that is not possible by braking the system;
reverse motion set by the operator, compression stress (so negative tensile stress) and effective reverse motion of the vehicle, if the stress load on the animal is below a predetermined fatigue threshold, no action is taken. If the stress load on the animal is above the threshold, a positive electric traction aid is used;

All operating states are referred to management unit 4 and are displayed on the touch screen, but the operator does not have to perform any operation as the system is fully automated.

In a preferred embodiment, operating data is also made available remotely via data modems for transmitting and receiving data both in and out of the central control unit 6.

In operating states where the motor 12 has no function and is therefore driven by the system, the motor 12 is used as a generator for batteries recharge.

The apparatus and method as a whole thus ensures not only that the animal is constantly kept below the level of maximum stress and aided in its action, but also that intervention and the resulting energy consumption is optimized to ensure maximum energy efficiency.

In addition, the described system only needs to read the traction/compression of the chassis regardless of the steering condition as it only needs to manage one motor.

In addition, the system described in this invention provides for reading the speed of the wheels independently with an encoder and an algorithm that receives data from the load cell and encoder, as well as from the control unit, to understand and adapt and progressively and optimally integrate the motor 12 power according to the identified operating states.

In this way, by reading the force, direction and speed of the movement, the system is able to understand what state it is in (uphill, downhill, excessive effort, below threshold, etc.) and integrate the animal traction correctly.

The invention therefore achieves important advantages in the implementation of an electrical aid for animal or human traction in vehicles and machines, in particular for agricultural processing, since it allows to continuously read the tensile or compression stress on the animal and the movement of the vehicle and to communicate to a central control unit information on both the dynamics and the speed and direction of the movement in such a way that from the combination of this information it is possible to identify which of the possible operating conditions is occurring and to act accordingly, also automatically.

The present invention has been described according to preferred embodiments, various modification in design can be made without departing from the scope of protection of the invention.

## Claims

1. Electrical aid apparatus for an animal-drawn vehicle or machine, movable on wheels on a ground, comprising a first frame (7) towed by fastening means (3) for connection to the animal, comprising:
means for measuring the tensile load (11), arranged so as to detect the load exerted by the animal connected to said fastening means (3),
an electric motor (12) to assist the traction of the vehicle,
a motion transmission (14) driven by said motor and connected to traction wheels (21) of the vehicle,
one or more sensors (25) capable of reading the movement of at least one wheel associated with the vehicle motion with respect to the ground,
an electric power supply of the motor (12),
a central control unit (6) operatively connected to said motor (12), to said measuring means (11) and to said sensors (25) for adjusting and managing traction aid parameters,
a brake acting on one or more wheels of the vehicle or machine **characterized in that**
said effort measuring means (11) are configured to read in succession dynamic data comprising the value and sign of the tensile load exerted by the animal and communicate it to the central control unit (6),
simultaneously the sensors (25) are configured to read the movement of said at least two wheels of the vehicle and communicate it to the central control unit (6) independently for each wheel providing first kinematic data relating to both the motion speed and direction of the wheels, **and in that**
said control unit (6) is configured to
process said dynamic data and said first kinematic data of the wheels and determine the vehicle speed and travel direction,
identify which traction and motion condition of the vehicle is occurring between a number of predetermined traction and motion conditions defined at least by the vehicle motion direction and the intensity and sign, positive traction or negative compression, of the load exerted or undergone by the animal, and
command the motor (12) to implement a corrective action of electric traction aid based on the identified traction and motion condition and possibly on one or more predefined fatigue threshold values of the tensile load.

2. Apparatus according to claim 1, wherein said vehicle is capable of moving in desired forward and reverse travel directions and said control unit (6) performs said step of identifying the traction and motion condition and corrective command based on one or more of the following travel conditions:
a) forward travel intended;
identification: positive tensile load and forward motion direction detected
correction: if the tensile load value is below the fatigue threshold the auxiliary motor does not intervene, while if the tensile load exerted by the animal is above the predefined fatigue threshold the auxiliary motor intervenes with a positive correction of the electric aid traction;
b) forward travel intended;
identification: positive tensile load and reverse motion direction detected
correction: the motor (12) intervenes to help the animal with forward traction, and if impossible or ineffective, the control unit actuates the brake;
c) forward travel intended;
identification: negative tensile load and forward motion direction detected
correction: the control unit corrects the motor (12) which intervenes to help the animal by slowing down the vehicle, and if impossible or ineffective the control unit actuates the brake;
d) forward travel intended;
identification: negative tensile load and reverse motion direction detected,
correction: the motor (12) intervenes with the aid of forward motion, or with the brake in opposition to the movement of the animal;
e) reverse travel intended,
identification: positive tensile load and forward motion direction,
correction: the motor (12) intervenes with the aid of forward motion, or with the brake in opposition to the movement of the animal;
f) reverse travel intended,
identification: positive tensile load and reverse motion direction,
correction: the motor (12) intervenes to help the animal with forward motion aid, and if impossible or ineffective, the control unit actuates the brake;
g) reverse travel intended,
identification: negative tensile load and forward motion detected;
correction: the motor (12) must intervene with reverse motion aid, and if impossible or ineffective, the control unit actuates the brake;
h) reverse travel intended,
identification: negative tensile load and reverse motion direction detected,
correction: if the animal's effort is below a fatigue threshold, the motor does not intervene, while if the animal's effort is above the threshold, the motor intervenes with the aid of electric traction in the reverse motion direction.

3. Apparatus according to claim 1 or 2, wherein said aid apparatus further comprises a management unit (4) accessible to a user of the vehicle or machine and operatively connected with said control unit (6) for adjusting and managing traction aid parameters.

4. Apparatus according to claim 3, wherein said management unit (4), in a preferred configuration, consists of a touch-response screen and electromechanical controls for the choice of control parameters and functions and is arranged near the operator in each configuration.

5. Apparatus according to one of the preceding claims, wherein said aid apparatus comprises a brake actuatable by said control unit in case of need, for example for safety or due to the inadequacy of the correction made.

6. Apparatus according to one of the preceding claims, wherein said transmission comprises a differential joint (13) driven by said motor and connected to traction wheels (21) of the vehicle by means of semi-axles (14).

7. Apparatus according to one of the preceding claims, wherein said aid apparatus comprises one or more commands for the operation of the system in manual mode (19).

8. Apparatus according to one of the preceding claims, wherein said effort measuring means (11) comprise a load cell.

9. Apparatus according to one of the preceding claims, wherein said sensors (25) for reading motion are associated with traction wheels (21).

10. Apparatus according to one of the preceding claims, wherein said sensors (25) comprise a sensor (25), preferably a Reed sensor, rigidly fixed to the vehicle or to the animal-drawn machine and associated with the motion of a disc (16) rigidly fastened with magnets (15), fastened to the moving wheel.

11. Apparatus according to one of the preceding claims, wherein said apparatus comprises a GPS sensor associated with the vehicle position and said control unit is connected to said GPS sensor and is configured to collect data on the positioning of the vehicle itself and on the motion thereof to provide both a geolocation and a verification measurement relative to the motion thereof.

12. Apparatus according to one of the preceding claims, wherein the data relating to the charge of the traction batteries and other data which are considered relevant by the user for display on the control management unit (4) are sent to the central control unit (6).

13. Apparatus according to one of the preceding claims, wherein in a preferred configuration the operational data are also made available remotely by means of data modems for the transmission and reception of both input and output data from the central control unit (6).

14. Apparatus according to one of the preceding claims, wherein, in operating situations in which the motor (12) does not exert any function and is therefore dragged by the system, this operates as a generator to recharge the batteries.

15. Method for controlling an electrical aid apparatus for an animal-drawn vehicle or machine, movable on wheels on a ground, comprising a first frame (7) towed by fastening means (3) for connection to the animal, wherein said aid apparatus comprises:
means for measuring the tensile load (11), arranged so as to detect the load exerted by the animal connected to said fastening means (3),
an electric motor (12) to assist the traction of the vehicle,
a motion transmission (14) driven by said motor and connected to traction wheels (21) of the vehicle,
one or more sensors (25) capable of reading the movement of at least one wheel associated with the vehicle motion with respect to the ground,
an electric power supply of the motor (12),
a central control unit (6) operatively connected to said motor (12), to said measuring means (11) and to said sensors (25) for adjusting and managing traction aid parameters,
a brake acting on one or more wheels of the vehicle or machine **characterized in that** it comprises the following steps
said effort measuring means (11) read dynamic data in succession comprising the value and sign of the tensile load exerted by the animal and communicate it to the central control unit (6),
simultaneously the sensors (25) read the movement of said at least two wheels of the vehicle and communicate it to the central control unit (6) independently for each wheel providing first kinematic data relating to both the speed and motion direction of the wheels,
said control unit (6),
processes said dynamic data and said first kinematic data of the wheels and determines the vehicle speed and travel direction,
identifies which traction and motion condition of the vehicle is occurring between a number of predetermined traction and motion conditions defined at least by the vehicle motion direction and the intensity and sign, positive traction or negative compression, of the load exerted or undergone by the animal, and
commands the motor (12) to implement a corrective action of electric traction aid based on the identified traction and motion condition and possibly on one or more predefined fatigue threshold values of the tensile load.

## Patentansprüche

1. Elektrisches Unterstützungssystem für ein von einem Tier gezogenes Fahrzeug oder eine tiergezogene Maschine, die auf Rädern über ein Gelände bewegt wird, umfassend einen ersten Rahmen (7), der mittels Befestigungsmitteln (3) mit dem Tier verbunden ist und gezogen wird. Dies umfasst:
Messmittel für die Zuglast (11), die so angeordnet sind, dass sie die vom Tier über die Befestigungsmittel (3) ausgeübte Zugkraft erfassen,
einen elektrischen Hilfsmotor (12) zur Unterstützung des Fahrzeugantriebs,
einen von diesem Motor angetriebenen Antrieb (14), der mit den Antriebsrädern (21) des Fahrzeugs verbunden ist,
einen oder mehrere Sensoren (25), die in der Lage sind, die Bewegung von mindestens einem der mit dem Fahrzeugantrieb verbundenen Rädern relativ zum Boden zu erfassen,
eine elektrische Stromversorgung für den Motor (12),
eine zentrale Steuereinheit (6), die operativ mit dem Motor (12), den Messmitteln (11) und den Sensoren (25) verbunden ist, zur Regelung und Verwaltung von Unterstützungsparametern für den Antrieb,
eine Bremse, die auf ein oder mehrere Räder des Fahrzeugs oder der Maschine wirkt,
**dadurch gekennzeichnet, dass**
die Messmittel (11) zur Erfassung der Zugkräfte so konfiguriert sind, dass sie fortlaufend dynamische Daten erfassen, welche den Wert und das Vorzeichen der vom Tier ausgeübten Zugkraft beinhalten, und diese an die zentrale Steuereinheit (6) übermitteln,
gleichzeitig die Sensoren (25) so konfiguriert sind, dass sie die Bewegung von mindestens zwei Rädern des Fahrzeugs unabhängig voneinander erfassen und diese an die zentrale Steuereinheit (6) übermitteln, wobei sie erste kinematische Daten liefern, die sowohl die Geschwindigkeit als auch die Bewegungsrichtung der Räder betreffen, **und dadurch, dass**
die zentrale Steuereinheit (6) so konfiguriert ist,
diese dynamischen Daten und die ersten kinematischen Daten der Räder zu verarbeiten und die Geschwindigkeit und Bewegungsrichtung des Fahrzeugs zu bestimmen,
zu erkennen, welche Antriebs- und Bewegungsbedingung des Fahrzeugs aus einer Anzahl vorbestimmter Antriebs- und Bewegungszustände vorliegt, die mindestens durch die Bewegungsrichtung des Fahrzeugs definiert sind, sowie der Intensität und dem Vorzeichen, positiv bei Zug oder negativ bei Druck, der vom Tier ausgeübten oder dem Tier auferlegten Last, und
den Motor (12) anzusteuern, um je nach erkannter Zug- oder Druckbedingung und Bewegungsverhältnisse sowie gegebenenfalls einem oder mehreren vordefinierten Ermüdungsschwellenwerten der Zug-/ Drucklast eine korrigierende elektrische Antriebsunterstützung zu aktivieren.

2. Vorrichtung nach Anspruch 1, bei der das Fahrzeug in der Lage ist, sich in gewünschte Richtung, vorwärts oder rückwärts zu bewegen, und bei der die Steuereinheit (6) die Phase der Identifikation der Zug- und Bewegungsbedingungen sowie der Korrekturansteuerungen auf Basis einer oder mehrerer der folgenden Fahrbedingungen durchführt:
a) Gewünschte Vorwärtsfahrt,
identifikation: Positive Zuglast und vorwärts gerichtete Bewegungsrichtung erkannt
korrektur: Wenn der Wert der Zuglast unterhalb der Ermüdungsschwelle liegt, greift der Hilfsmotor nicht ein, während bei Überschreitung der vordefinierten Ermüdungsschwelle der Hilfsmotor eine positive Korrektur der elektrischen Antriebsunterstützung vornimmt;
b) Gewünschte Vorwärtsfahrt,
identifikation: Positive Zuglast und rückwärts gerichtete Bewegungsrichtung erkannt
korrektur: Der Motor (12) greift ein, um das Tier mit einem Vorwärtsschub zu unterstützen; Im Fall, dass sich dies als unmöglich oder unwirksam erweist aktiviert die Steuereinheit die Bremse;
c) Gewünschte Vorwärtsfahrt,
identifikation: Negative Zuglast und vorwärts gerichtete Bewegungsrichtung erkannt
korrektur: Die Steuereinheit steuert den Motor (12) so an, dass dieser das Tier unterstützt, indem er das Fahrzeug abbremst; Im Fall, dass sich dies als unmöglich oder unwirksam erweist aktiviert die Steuereinheit die Bremse;
d) Gewünschte Vorwärtsfahrt,
identifikation: Negative Zuglast und rückwärts gerichtete Bewegungsrichtung erkannt
korrektur: Der Motor (12) greift mit Unterstützung durch Vorwärtsbewegung ein oder mit der Bremse, um der Bewegung des Tieres entgegenzuwirken;
e) Gewünschte Rückwärtsfahrt,
identifikation: Positive Zuglast und vorwärts gerichtete Bewegungsrichtung,
korrektur: Der Motor (12) greift unterstützend durch Vorwärtsbewegen oder der Bewegung des Tieres entgegendwirkend mit der Bremse ein.
f) Gewünschte Rückwärtsfahrt,
identifikation: Positive Zuglast und rückwärts gerichtete Bewegungsrichtung,
korrektur: Der Motor (12) greift unterstützend durch Vorwärtsbewegen ein; Im Fall, dass sich dies als unmöglich oder unwirksam erweist aktiviert die Steuereinheit die Bremse;
g) Gewünschte Rückwärtsfahrt,
identifikation: Negative Zuglast und vorwärts gerichtete Bewegungsrichtung erkannt,
korrektur: Der Motor (12) greift unterstützend durch Rückwärtsbewegen ein; Im Fall, dass sich dies als unmöglich oder unwirksam erweist aktiviert die Steuereinheit die Bremse;
h) Gewünschte Rückwärtsfahrt,
identifikation: Negative Zuglast und rückwärts gerichtete Bewegungsrichtung erkannt,
korrektur: Wenn die Anstrengung des Tieres unterhalb einer Ermüdungsschwelle liegt, greift der Motor nicht ein, während bei Überschreitung dieser Schwelle der Motor mit elektrischer Zugunterstützung in Rückwärtsrichtung eingreift.

3. Vorrichtung nach Anspruch 1 oder 2, wobei die Unterstützungsvorrichtung zusätzlich eine Bedieneinheit (4) umfasst, die für einen Benutzer des Fahrzeugs oder der Maschine zugänglich und operativ mit der Steuereinheit (6) verbunden ist, um Parameter der Antriebsunterstützung zu regeln und zu verwalten.

4. Vorrichtung nach Anspruch 3, wobei die Bedieneinheit (4) in einer bevorzugten Ausführung aus einem Touchscreen und elektromechanischen Bedienelementen zur Auswahl von Parametern und Steuerfunktionen besteht und sich in der Nähe des Bedieners in sämtlichen Konfigurationen befindet.

5. Vorrichtung nach einem der vorhergehenden Ansprüche, wobei die Unterstützungsvorrichtung eine Bremse umfasst, die im Bedarfsfall über die Steuereinheit betätigt werden kann, beispielsweise aus Sicherheitsgründen oder bei unzureichender Korrekturwirkung.

6. Vorrichtung nach einem der vorhergehenden Ansprüche, wobei die genannte Übertragung ein Differentialgelenk (14) umfasst, das von dem Motor angetrieben und über Antriebswellen (9) mit den Antriebsrädern (21) des Fahrzeugs verbunden ist.

7. Vorrichtung nach einem der vorhergehenden Ansprüche, wobei die Unterstützungsvorrichtung einen oder mehrere Steuerbefehle (15) für den manuellen Betrieb des Systems umfasst.

8. Vorrichtung nach einem der vorhergehenden Ansprüche, wobei die genannten Kraftmessmittel (11) eine Wäge Zelle umfassen.

9. Vorrichtung nach einem der vorhergehenden Ansprüche, wobei die genannten Bewegungssensoren (25) mit den Antriebsrädern (21) verbunden sind.

10. Vorrichtung nach einem der vorhergehenden Ansprüche, wobei die genannten Sensoren (25) einen Sensor (25) umfassen, vorzugsweise einen Reed-Sensor, der starr am Fahrzeug oder an der von Tieren gezogenen Maschine befestigt ist und der die Bewegung einer mit Magneten (15) bestückten Scheibe (16) detektiert, welche an dem sich bewegenden Rad befestigt ist.

11. Vorrichtung nach einem der vorhergehenden Ansprüche, wobei die Vorrichtung einen GPS-Sensor umfasst, der mit der Position des Fahrzeugs verbunden ist, und wobei die Steuereinheit mit diesem GPS-Sensor verbunden ist und so konfiguriert ist, dass sie Daten über die Position des Fahrzeugs sowie über dessen Bewegung sammelt, um sowohl eine Geolokalisierung als auch eine Überwachung in Bezug auf dessen Bewegung zu liefern.

12. Vorrichtung nach einem der vorhergehenden Ansprüche, wobei der zentralen Steuereinheit (6) Daten über den Ladezustand der Antriebsbatterien (16) sowie weitere vom Benutzer als relevant erachtete Daten zur Anzeige auf der Bedieneinheit (4) übermittelt werden.

13. Vorrichtung nach einem der vorhergehenden Ansprüche, wobei in einer bevorzugten Konfiguration die Betriebsdaten auch aus der Ferne über ein Datenmodem verfügbar gemacht werden, das für den Datenempfang und -versand zur und von der zentralen Steuereinheit (6) verwendet wird.

14. Vorrichtung nach einem der vorhergehenden Ansprüche, wobei in Betriebssituationen, in denen der Motor (12) keine Funktion ausübt und somit vom System mitgezogen wird, dieser als Generator zur Aufladung der Batterien arbeitet.

15. Verfahren zur Steuerung einer elektrischen Unterstützungsvorrichtung für ein von einem Tier gezogenes Fahrzeug oder eine Maschine, die auf Rädern über einen Untergrund beweglich ist und einen ersten Rahmen (7) umfasst, der über Befestigungsmittel (3) mit dem Tier verbunden gezogen wird, wobei die genannte Unterstützungsvorrichtung Folgendes umfasst:
Mittel (11) zur Messung der Zuglast, so angeordnet, dass sie die von dem mit den Befestigungsmitteln (3) verbundenen Tier ausgeübte Last erfassen,
einen Elektromotor (12) zur Unterstützung des Fahrzeugantriebs,
eine von dem Motor angetriebene Bewegungsübertragung (14), die mit den Antriebsrädern (21) des Fahrzeugs verbunden ist,
einen oder mehrere Sensoren (25), die in der Lage sind, die Bewegung von mindestens einem mit der Bewegung des Fahrzeugs relativ zum Boden verbundenen Rad zu erfassen,
eine elektrische Energieversorgung für den Motor (12),
eine zentrale Steuereinheit (6), die mit dem Motor (12), den Messmitteln (11) und den Sensoren (25) operativ verbunden ist, zur Regelung und Verwaltung der Parameter zur Antriebsunterstützung,
eine Bremse, die auf eines oder mehrere Räder des Fahrzeugs oder der Maschine wirkt,
**dadurch gekennzeichnet, dass** das Verfahren die folgenden Schritte umfasst:
die genannten Messmittel (11) zur Erfassung der Kräfte lesen fortlaufend dynamische Daten aus, die den Wert und das Vorzeichen der vom Tier ausgeübten Zuglast umfassen, und übermitteln diese an die zentrale Steuereinheit (6),
gleichzeitig erfassen die Sensoren (25) die Bewegung von mindestens zwei Rädern des Fahrzeugs und übermitteln diese unabhängig voneinander an die zentrale Steuereinheit (6), wobei erste kinematische Daten bereitgestellt werden, die sowohl die Geschwindigkeit als auch die Bewegungsrichtung der Räder betreffen, die Steuereinheit (6)
verarbeitet die genannten dynamischen Daten und die ersten kinematischen Daten des Rades und bestimmt Geschwindigkeit und Fahrtrichtung des Fahrzeugs,
identifiziert, welche Zug- und Bewegungsbedingung des Fahrzeugs aus einer Anzahl vorbestimmter Zug- und Bewegungsbedingungen vorliegt, die mindestens durch die Fahrtrichtung des Fahrzeugs sowie durch die Intensität und das Vorzeichen - positiv für Zug oder negativ für Druck - der vom Tier ausgeübten oder erfahrenen Last definiert sind, und
steuert den Motor (12) zur Durchführung einer korrigierenden elektrischen Antriebsunterstützung entsprechend der identifizierten Zug- und Bewegungsbedingung und gegebenenfalls in Abhängigkeit von einem oder mehreren vordefinierten Ermüdungsschwellenwerten der Zuglast.

## Revendications

1. Dispositif d'assistance électrique pour un véhicule ou une machine à traction animale, se déplaçant sur roues sur un terrain, comprenant un premier châssis (7) tracté par des moyens de fixation (3) de connexion à l'animal, comprenant :
des moyens de mesure de la charge de traction (11), disposés de manière à détecter la charge exercée par l'animal connecté à ces moyens de fixation (3),
un moteur d'assistance électrique (12) pour la traction du véhicule,
une transmission du mouvement (14) entraînée par ledit moteur et connectée aux roues de traction (21) du véhicule,
un ou plusieurs capteurs (25) capables de lire le mouvement d'au moins une roue associée au mouvement du véhicule par rapport au terrain,
une alimentation électrique du moteur (12),
une unité centrale de commande (6) connectée opérationnellement audit moteur (12), auxdits moyens de mesure (11) et auxdits capteurs (25) pour le réglage et la gestion des paramètres d'assistance à la traction,
un frein agissant sur une ou plusieurs roues du véhicule ou de la machine.
**caractérisé par le fait que**
lesdits moyens de mesure (11) des efforts sont configurés pour lire successivement des données dynamiques comprenant la valeur et le signe de la charge de traction exercée par l'animal et les communiquer à l'unité centrale de commande (6),
Simultanément, les capteurs (25) sont configurés pour lire le mouvement d'au moins deux roues du véhicule et le communiquer à l'unité centrale de commande (6) indépendamment pour chaque roue, fournissant ainsi des premières données cinématiques relatives à la fois à la vitesse et à la direction du mouvement des roues, et
en ce que ladite unité de commande (6) est configurée pour :
élaborer lesdites données dynamiques et lesdites premières données cinématiques des roues et déterminer la vitesse et la direction de déplacement du véhicule,
identifier quelle condition de traction et de mouvement du véhicule se vérifie parmi un certain nombre de conditions de traction et de mouvement prédéterminées, définies au moins par la direction du mouvement du véhicule et de l'intensité et du signe, positif de traction ou négatif de compression, de la charge exercée ou subie par l'animal, et
commander le moteur (12) à mettre en oeuvre une action corrective d'assistance électrique à la traction en fonction de la condition de traction et de mouvement identifiée et éventuellement d'une ou plusieurs valeurs de seuil de fatigue prédéfinies de la charge de traction.

2. Dispositif selon la revendication 1, dans lequel ledit véhicule est capable de se déplacer dans les directions voulues de marche avant et de marche arrière et ladite unité de commande (6) exécute ladite étape d'identification de la condition de traction et de mouvement et de commande corrective en fonction d'une ou plusieurs des conditions de marche suivantes :
a) marche voulue avant,
identification : charge de traction positive et direction de mouvement détectée vers l'avant
correction : si la valeur de la charge de traction est inférieure au seuil de fatigue, le moteur auxiliaire n'intervient pas, tandis que si la charge de traction exercée par l'animal dépasse le seuil de fatigue prédéfini, le moteur auxiliaire intervient avec une correction positive de l'assistance à la traction électrique ;
b) marche voulue avant,
identification : charge de traction positive et direction de mouvement détectée vers l'arrière
correction : le moteur (12) intervient pour aider l'animal avec la traction vers l'avant, et en cas d'impossibilité ou d'inefficacité, l'unité de commande actionne le frein ;
c) Marche voulue avant,
identification : charge de traction négative et direction de mouvement détectée vers l'avant
correction : l'unité de commande corrige le moteur (12), qui intervient pour aider l'animal en ralentissant le véhicule, et en cas d'impossibilité ou d'inefficacité, l'unité de commande actionne le frein ;
d) marche voulue avant,
identification : charge de traction négative et direction de mouvement détectée vers l'arrière,
correction : le moteur (12) intervient avec l'aide du mouvement vers l'avant, ou avec le frein en opposition au mouvement de l'animal ;
e) marche voulue arrière,
identification : charge de traction positive et direction de mouvement vers l'avant,
correction : le moteur (12) intervient avec l'aide du mouvement vers l'avant, ou avec le frein en opposition au mouvement de l'animal ;
f) marche voulue arrière,
identification : charge de traction positive et direction de mouvement vers l'arrière,
correction : le moteur (12) intervient pour aider l'animal avec l'aide du mouvement vers l'avant, et en cas d'impossibilité ou d'inefficacité, l'unité de commande actionne le frein ;
g) marche voulue arrière,
identification : charge de traction négative et mouvement détecté vers l'avant ;
correction : le moteur (12) doit intervenir avec l'aide du mouvement vers l'arrière, et en cas d'impossibilité ou d'inefficacité, l'unité de commande actionne le frein ;
h) marche voulue arrière,
identification : charge de traction négative et direction de mouvement détectée vers l'arrière,
correction : si l'effort de l'animal est en dessous d'un seuil de fatigue, le moteur n'intervient pas, tandis que si l'effort de l'animal dépasse le seuil, le moteur intervient avec l'aide de la traction électrique en direction du mouvement arrière.

3. Dispositif selon la revendication 1 ou 2, dans lequel ledit dispositif d'assistance comprend également une unité de gestion (4) accessible à un utilisateur du véhicule ou de la machine et connectée opérationnellement à ladite unité de commande (6) pour le réglage et la gestion des paramètres d'assistance à la traction.

4. Dispositif selon la revendication 3, dans lequel ladite unité de gestion (4), dans une configuration préférée, est constituée d'un écran tactile et de commandes électromécaniques pour le choix des paramètres et des fonctions de contrôle, et est disposée à proximité de l'opérateur dans toute configuration.

5. Dispositif selon l'une des revendications précédentes, dans lequel ledit dispositif d'assistance comprend un frein actionnable par ladite unité de commande en cas de nécessité, par exemple pour la sécurité ou en cas d'insuffisance de la correction.

6. Dispositif selon l'une des revendications précédentes, dans lequel ladite transmission comprend un joint différentiel (14) entraîné par ledit moteur et connecté aux roues de traction (21) du véhicule par l'intermédiaire de demi-axes (9).

7. Dispositif selon l'une des revendications précédentes, dans lequel ledit dispositif d'assistance comprend un ou plusieurs commandes pour le fonctionnement du système de manière manuelle (15).

8. Dispositif selon l'une des revendications précédentes, dans lequel lesdits moyens de mesure des efforts (11) comprennent une cellule de charge.

9. Dispositif selon l'une des revendications précédentes, dans lequel lesdits capteurs (25) pour la lecture du mouvement sont associés à des roues de traction (21).

10. Dispositif selon l'une des revendications précédentes, dans lequel lesdits capteurs (25) comprennent un capteur (25), de préférence un capteur Reed, rigidement fixé au véhicule ou à la machine à traction animale et associé au mouvement d'un disque (16) auquel sont rigidement fixés des aimants (15), fixé à la roue en mouvement.

11. Dispositif selon l'une des revendications précédentes, dans lequel ledit dispositif comprend un capteur GPS associé à la position du véhicule, et ladite unité de commande est connectée audit capteur GPS et est configurée pour collecter des données sur le positionnement du véhicule et son mouvement, afin de fournir à la fois une géolocalisation et une mesure de vérification concernant son mouvement.

12. Dispositif selon l'une des revendications précédentes, dans lequel les données relatives à la charge des batteries de traction (16) et d'autres données considérées comme pertinentes par l'utilisateur sont envoyées à l'unité centrale de commande (6) pour être affichées sur l'unité de gestion du contrôle (4).

13. Dispositif selon l'une des revendications précédentes, dans lequel, dans une configuration préférée, les données opérationnelles sont également disponibles à distance via un modem de données pour la transmission et la réception de données tant entrantes que sortantes de l'unité centrale de commande (6).

14. Dispositif selon l'une des revendications précédentes, dans lequel, dans les situations opérationnelles où le moteur (12) n'exerce aucune fonction et est donc entraîné par le système, il fonctionne comme générateur pour la recharge des batteries.

15. Méthode de contrôle d'un dispositif d'assistance électrique pour un véhicule ou une machine à traction animale, mobile sur des roues sur un terrain, comprenant un premier châssis (7) tracté par des moyens de fixation (3) de connexion à l'animal, dans lequel ledit dispositif d'assistance comprend :
des moyens de mesure de la charge de traction (11), disposés de manière à détecter la charge exercée par l'animal connecté à ces moyens de fixation (3),
un moteur d'assistance électrique (12) à la traction du véhicule,
une transmission du mouvement (14) actionnée par ledit moteur et connectée aux roues de traction (21) du véhicule,
un ou plusieurs capteurs (25) capables de lire le mouvement d'au moins une roue associée au mouvement du véhicule par rapport au terrain,
une alimentation électrique du moteur (12),
une unité centrale de commande (6) connectée opérationnellement audit moteur (12), à ces moyens de mesure (11) et à ces capteurs (25) pour le réglage et la gestion des paramètres d'assistance à la traction,
un frein agissant sur une ou plusieurs roues du véhicule ou de la machine,
**caractérisé par le fait** de comprendre les étapes suivantes :
lesdits moyens de mesure (11) des efforts lisent successivement des données dynamiques comprenant la valeur et le signe de la charge de traction exercée par l'animal et les communiquent à l'unité centrale de commande (6),
en même temps, les capteurs (25) lisent le mouvement de ces au moins deux roues du véhicule et le communiquent à l'unité centrale de commande (6) indépendamment pour chaque roue, fournissant ainsi des premières données cinématiques relatives à la fois à la vitesse et à la direction du mouvement des roues,
ladite unité de commande (6),
traite ces données dynamiques et ces premières données cinématiques des roues et détermine la vitesse et la direction de marche du véhicule,
identifie quelle condition de traction et de mouvement du véhicule se produit parmi un certain nombre de conditions prédéterminées de traction et de mouvement définies au moins par la direction du mouvement du véhicule et l'intensité et le signe, positif de traction ou négatif de compression, de la charge exercée ou subie par l'animal, et
commande au moteur (12) d'effectuer une action corrective d'assistance électrique à la traction en fonction de la condition de traction et de mouvement identifiée et éventuellement en fonction d'un ou plusieurs seuils de fatigue prédéfinis de la charge de traction.
